# EUROPEAN PATENT SPECIFICATION

(11) **EP 3 566 674 B1**
(45) Date of publication and mention of the grant of the patent: **26.05.2021**
(21) Application number: 18721425.9
(22) Date of filing: 14.02.2018
(51) Int. Cl.: A61C 9/00, A61C 8/00

(54) **DIGITIZABLE DENTAL IMPLANT ANALOG**
DIGITALISIERBARES DENTALIMPLANTATANALOG
ANALOGUE D'IMPLANT DENTAIRE NUMÉRISABLE

(30) Priority: 17.02.2017 ES 201730163 U
(43) Date of publication of application: 13.11.2019
(73) Proprietor: Talladium España, S.L., 25005 Lleida (ES)
(72) Inventor: XAM-MAR MANGRANÉ, Esteban, 25002 Lleida (ES)
(74) Representative: Carlos Hernando, Borja
(86) International application number: PCT/ES2018/070104
(87) International publication number: WO 2018/150067

(56) References cited:
- WO-A1-2015/046675
- WO-A2-2007/062658
- ES-U- 1 153 564
- GB-A- 2 487 553
- US-A1- 2006 228 672
- US-A1- 2016 250 008

## Description

### OBJECT OF THE INVENTION

The present invention relates to a replica of a dental implant able to be scanned by means of an extraoral scanner once it has been positioned on an impression post in the patient's dental impression tray.

By means of the present invention, it is no longer necessary to previously make the oral model by forming a positive of the dental impression tray for extraoral digitalization of the position of the patient's implant, nor is it necessary to use additional scanbodies. Eliminating the process of forming a positive avoids the loss of precision caused by forming the positive of the tray, also reducing the work time and the use of materials.

The device object of the present invention is used in the field of dental implantology.

### BACKGROUND OF THE INVENTION

In dental restorations, such as crowns and bridges mounted on dental implants, it is necessary to know the position of the patient's implants as precisely as possible.

The emergence of scanners for dental use, and CAD-CAM (computer-aided design and computer-aided manufacturing) technology has to a large degree taken the place of the traditional work method that has been used up to the present. The digitalization of the patient's oral situation allows the design and manufacturing of dental structures to be done through a computer, achieving excellent adjustments with quality that is far superior compared to traditional casting systems.

By means of scanners, the oral situation of a patient is digitalized by directly scanning the patient's mouth (through an intraoral scanner), or externally by scanning the oral model (through an extraoral scanner). For the of the library files to have precise positioning based on the digital file created after the scan, scan posts or scanbodies are currently used. Scanbodies are pieces that adapt to the connection of the implant or replica at one end and at the other end have a scannable surface.

In the intraoral scan, the records of the patient are taken by scanning the patient's mouth with an intraoral scanner and the scanbodies are coupled to the implants. The high costs of the machinery (intraoral scanner) necessary for the professional to adapt to the new advances often make it impossible to amortize the investment made in machinery by professionals working in the sector. This has slowed its introduction to the market, currently making it a technology used by only a minority in the field.

In an extraoral scan, the scan is made on a physical model, made of plaster or another material, by an extraoral scanner or tabletop scanner. In this case the scanbodies are placed on the implant replicas located on the model.

In the case of working with a plaster model, the clinical part of making a dental impression of the mouth is done through the traditional system. Once the records of the mouth have been taken, in the laboratory, the implant replicas are screwed into each one of the impression posts and plaster is poured into the impression to create a physical model, which is the model that will be scanned. The replica is thus embedded in the oral model, marking the position of the patient's implant.

Rapid technological advances are leading to the need for new products that allow professionals to adapt more quickly and simply to the new demands of precision and quality required by CAD-CAM technology.

Relevant prior arts are exemplified by WO 2007/062658 A2 and ES 1 153 564 U.

The present invention consists of developing a new product that enables extraoral digitalization of the position of the dental implant prior to the development of the positive of the oral impression without requiring a physical model, which has been necessary up to the present. Since the patient's physical model is no longer needed, the loss in precision caused by the expansion of the material used for forming the positive of the tray is avoided, facilitating the work process without having to send the oral model to the laboratory for the process to be carried out, without using scan posts and reducing the work time, as well as the expenses on materials used.

### DESCRIPTION OF THE INVENTION

The digitizable dental implant replica, or scanbody-replica, is an implant replica that allows a digital record of the position of the implant to be made extraorally and directly on the oral impression tray by means of a scanner, without the need to form a positive, according to claim 1.

The present invention is especially designed to take advantage of all of the potential of the digitalization of the extraoral scanner, incorporating agility in the system, reducing the use of resources and improving the precision of the final product.

Specifically, the digitalization procedure comprises the following stages:
a) Making an impression of the patient's mouth, which incorporates the implant or implants, by applying a resin, silicone or paste in the tray.
b) Extracting the tray from the patient's mouth and placing the digitizable dental replica, object of the invention, in the tray with the resin, silicone or paste, and
c) Introducing the tray with the resin, silicone or paste and with the replica in an extraoral scanner, or introducing the resin, silicone or paste with the replica, after separating them from the tray, in an intraoral scanner.

To make an impression of the mouth, it is necessary to previously place the impression post in the dental implant placed in the patient's mouth so that the post determines the inclination of said implant. To make the impression, an open tray or a closed tray may be used, and depending on the type of tray, the post can remain inserted (after being loosened from the implant after the tray is introduced) in the tray after it has been extracted from the mouth, penetrating the resin, silicone or paste (open tray) or the post can remain attached to the implant, yet leaving a hole in the resin, silicone or paste when the tray is removed from the mouth (closed tray).

In the case of an open tray, the replica will be adjusted on one end of the impression post embedded in the resin, silicone or paste, with the help of a screw inserted through the opposite end, and in the case of a closed tray, it will be necessary to release the impression post from the implant and insert it in the hole it has left in the resin, silicone or paste extracted from the tray, to then proceed to adjust the replica with the collaboration of a screw on the impression post.

This way, once the resin, silicone or paste inside or outside the impression tray has been scanned, in the extraoral scanner, a digital file is then obtained which can be immediately sent to the laboratory, and by digitally processing the same a positive is obtained which will be used for the design and manufacturing using CAD/CAM. Once the design has been made, an oral model can be obtained through milling or digital impression. This way, the dental clinic can access new technologies without excessive extra costs, offering their clients highly precise dental prostheses.

By means of the digitalization procedure, and the use of the replica object of the present invention, the process of forming a positive and making a physical model is no longer necessary, avoiding a loss of precision caused by the expansion of the material used for forming a positive of the tray, further reducing the work time and materials used.

As was previously stated, the replica is placed on the impression post, such that the assembly obtained of the impression tray, formed by the silicone, resin or paste, the impression post and the replica of the implant, can be digitalized by means of scanning devices and, as was previously mentioned, without the need to use scan posts or scanbodies, since the same replica has a geometry that allows for the digitalization and the subsequent positioning thereof in the specific digital library.

The replica, in general terms, preferably in a cylindrical or cylindrical-conical shape, varies in structure based on its embodiment, being capable to comprise one or several bodies. The replica generally has three different zones: a first zone, or connection zone, a second intermediate zone, preferably cylindrical or cylindrical-conical, in other words with at least one cylindrical part, and a third zone, or scanning zone, and which is scannable. The second zone has the first zone at one of the ends thereof, and the third zone at the opposite end.

By means of the connection zone, the digitizable dental implant replica is positioned on the impression post, or transfer post, placing the end susceptible to digitalization at the end farthest from the impression tray.

The first zone, or connection zone, either external or internal, depending on the connection with the implant or attachment, incorporates a perforation with an inner thread that allows the aforementioned screw to be inserted for adjustment thereof to the impression post, such that the impression post is placed between the screw and the digitizable replica. The connection and the inner thread of the replica are designed based on the type of dental implant or attachment used.

The third zone, or scanning zone, has an outer surface made with a material and surface finish that allows for the digitalization thereof by means of scanning technology. Said third zone has at least one cut on the plane formed between the generatrix and the radius of the second zone with at least one cylindrical part of the replica, the digitalization planes or read surfaces of the scanning zone determining said cut or cuts. Said scanning zone preferably comprises three scanning surfaces, such that a first surface defines the height at which the replica is situated, a second surface provides information on how the replica is oriented based on the orientation of the faces thereof, and a third surface defines the position of the replica on the horizontal plane. Therefore, these three scanning surfaces completely define the position of the replica on the impression post.

These digitalization planes enable a precise reading of the replica, and also allow the position in the CAD dental software used to be completely referenced. These surfaces that are scannable provide the necessary information both for the orientation of the connection of the implant, as well as its height position with respect to the horizontal plane. Thus, the scanning surfaces completely define the replica in the space, guaranteeing a correct adjustment, or best fit, with the dental software used.

The replica can include a notch in a circular or polygonal form that follows the directrix of the second zone with the at least one cylindrical part that allows the limit of the scanning region to be marked. The region that is above the aforementioned notch has to be completely cleared, without foreign elements or bodies that may prevent a correct reading by the scanner.

As was previously mentioned, the replica can be formed by a body that incorporates the three previously described zones, or it can be formed by two bodies that couple together by coupling means: a first body that comprises the first and second zones, and a second body that comprises the third zone. Said second body can be a scan post or scanbody. Preferably arranged between both bodies is a non-rotating connection to prevent rotation between both bodies.

The coupling means between both bodies can be different types, as long as they guarantee the position of the faces of the scanning zone in the second body or scan post with respect to the impression post. Said coupling means can be threaded, internally or externally, and/or a retention screw, notches, O-rings or other mechanical retention mechanisms, or by means of magnetic forces, such as magnets. For example, the second scanbody or scan post can comprise a through hole that allows a screw to be inserted that passes through said second body until reaching the first body into which it is screwed. Another alternative consists of incorporating an element threaded at one end which allows the screwing thereof in a housing arranged on the first body and which has a housing on the second end opposite to the thread, such that a first magnet is arranged in the housing of the second end of the threaded element and a second magnet is arranged on a housing arranged on one end of the first body, such that the attraction of both magnets allows for a perfect placement of the second body on the first body.

### BRIEF DESCRIPTION OF THE FIGURES

The following figures included below show different aspects of the invention in a more detailed way, with the aim of providing a better understanding of the same.
Figures 1a and 1b show a first embodiment of a digitizable dental implant replica, wherein a single body incorporates the three zones that make up the replica. Figure 1a shows an elevation view of the replica and figure 1b shows a perspective view of the replica of figure 1.
Figure 2 shows a replica like the one in figure 1 on impression posts inserted in the impression tray.
Figure 3 shows an exploded perspective view of a replica and the elements for connecting the same to an impression post.
Figure 4 shows an elevation view of a second embodiment of a replica with two bodies.
Figure 5 shows an elevation view of a third embodiment of a replica with two bodies according to the invention.
Figure 6 shows an explode perspective view of a fourth embodiment of the invention, which could coincide with that of figures 4 or 5, wherein the coupling means between the different bodies of the replica and the connection elements for an impression post are shown.

### DESCRIPTION OF EMBODIMENTS OF THE INVENTION

In light of the aforementioned figures, a description of different embodiments of the present invention is provided below.

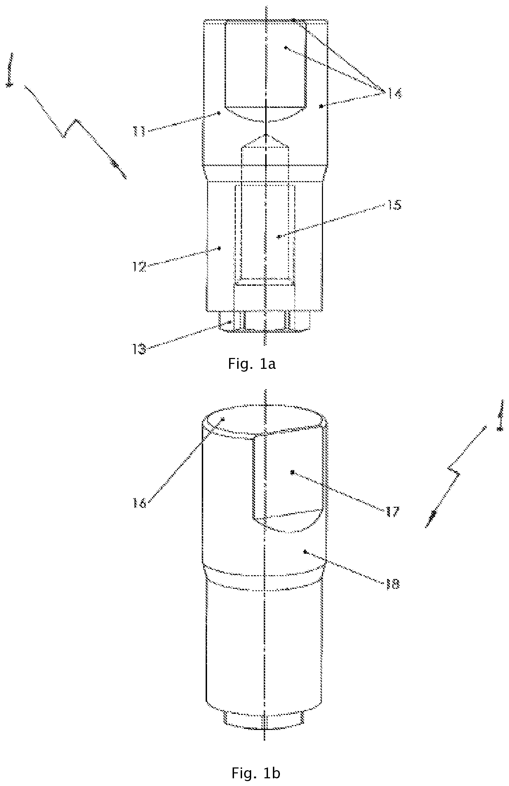

Figures 1a and 1b show a first embodiment of the digitizable dental implant replica 1. This embodiment comprises a single body 1 that has a first zone or connection zone 13 on a first end to be coupled to the impression post 20, a second zone 12 with a part that is at least cylindrical, preferably completely cylindrical or cylindrical-conical, and a second end, opposite to the end of the first zone, a third zone or scanning zone 11, which is scannable and has at least a scanning surface or plane 14. It preferably has three scanning surfaces 14, completely defining the position of the replica 1 on the impression post 20. These scanning surfaces can be seen in figure 1b, which shows a first surface 16 that defines the height at which the replica 1 is situated, a second surface 17 that provides information on how the replica 1 is oriented based on the orientation of the faces thereof, and a third surface 18 that defines the position of the replica 1 on the horizontal plane.

The connection zone 13 of the replica 1 and the second zone 12 incorporate a perforation with an inner thread 15 to adjust the replica 1 to the impression post 20 by using a screw 21. Said connection zone 13 of the replica 1 can be internal or external based on the type of connection of the implant or attachment, and thus it is designed based on the implant connection used, the connection of the impression post 20 being the inverse thereof, and thereby preventing the rotation between both elements. The adjustment of the replica 1 on the impression post 20 is done by screwing the screw of the impression post 21, thanks to the inner thread 15 incorporated in the replica 1.

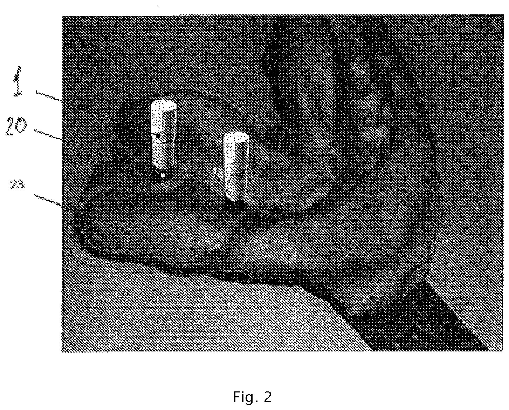

Figure 2 shows the replica 1 already attached to the post 20 situated inside the resin, silicone or paste 23 obtained from the tray after the stages of:
a) Making an impression of the patient's mouth, which incorporates the implant or implants, by applying a resin, silicone or paste 23 in a tray, and
b) Extracting the tray from the patient's mouth and placing the digitizable dental replica 1 in the tray with the resin, silicone or paste 23 attached to the post 20.

After the previous stages, the extraoral scan of the assembly can be made to obtain a digital file which can be immediately sent to the laboratory, and by digitally processing the same a positive is obtained which will be used for the design and subsequent manufacturing using CAD/CAM.

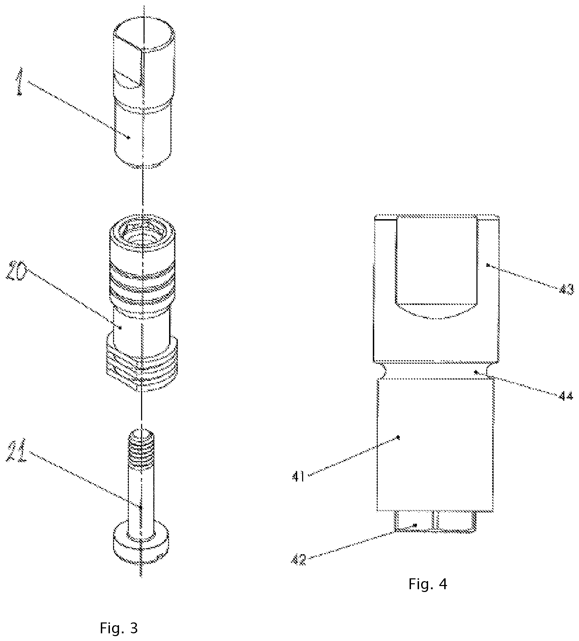

Figure 3 shows the connection that is made in the resin, silicone or paste 23 between the replica 1, the post 20 and the fastening screw 21, which passes through the post 20 to be screwed to the connection zone 13 of the replica 1, but without representing the resin, silicone or paste 23.

The embodiment described can be manufactured in a single material or a combination of materials, such as titanium, or non-metal materials such as PEEK or ceramic polymers, among others, although the surface finish of the material must allow digitalization thereof.

Figure 4 shows a second embodiment of the replica object of the invention which is formed by two independent bodies joined together by appropriate coupling means. The first body 42 comprises the first zone or connection zone connecting to the post and the second body 41 incorporates both the second zone and the third zone, or scanning zone 43. The first body therefore has the connection zone with an inner or outer geometry adapted to the implant or attachment, in other words, it is variable based on the implant connection or attachment used, which also allows the coupling thereof to the impression post. The scanning zone 43 has the necessary three scanning surfaces, completely defining the position of the replica on the impression post. Arranged between the second and third zone is a notch that follows the directrix of the second zone to mark the limit of the third zone or scanning zone. Said notch is preferably circular, although it could be polygonal.

In this second embodiment, which has two bodies, the same are manufactured with different materials. The first body, which must guarantee the fastening to the impression post, can be made with metal materials, such as titanium, stainless steel or cobalt-chromium, among others, and a second body can be made of non-metal materials, such as PEEK or ceramic polymers, among others.

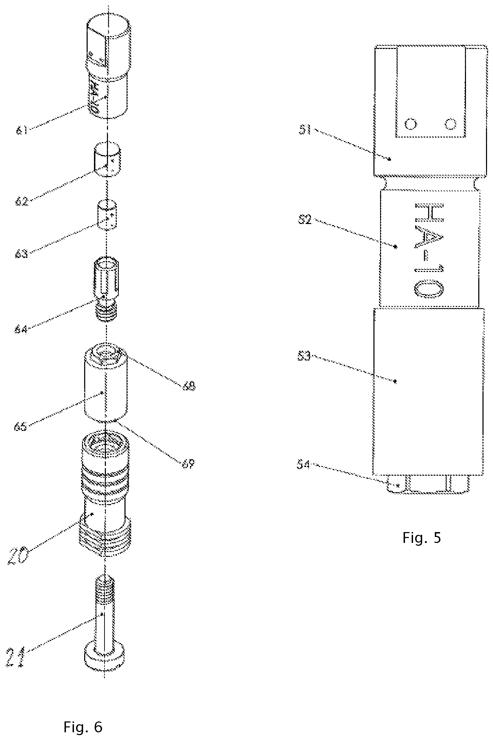

Figure 5 shows a third embodiment of the replica object of the application in which the same is also divided into two independent bodies coupled by suitable coupling means. Specifically, the first body comprises the first zone or connection zone 54 to the impression post and the second zone 53, which is partially cylindrical. This first body allows for the coupling of a second body to the third zone or scanning zone, being said second body able to be a scan post or scanbody 52 that always incorporates a scanning zone 51.

Figure 6 shows an embodiment of the replica in which the same comprises two bodies like the ones described for figure 5, specifically, a first body that incorporates a connection zone 69 to the impression post 20 and the second partially cylindrical zone 65. The coupling or connection between the first body and the impression post 20 is done by means of a screw 21 inserted from one end of the post (not shown) which is embedded in the impression and adjusted to the inner thread situated in the first body 65, 69 of the replica. This first body 65, 69 allows for the coupling of a second body to the third zone or scanning zone 61, represented by a scan post or scanbody 61, through different coupling means. Said scan post 61, which can be intraoral or extraoral, incorporates the third zone or scanning zone which is scannable. As was previously mentioned, the connection zone 69 can be internal or external and is variable based on the connection of the implant or attachment used.

The coupling means between the first body 65, 69 and the second body 61 comprise an element 64 that has a thread on one end and a housing on the opposite end. Said element 64 is screwed into a threaded hole arranged on the second zone 65 of the first body and specifically on the opposite end 68 of the connection zone 69. Said end opposite 68 the connection zone 69 has a non-rotating connection 68 to prevent the rotation of both bodies. In the housing of the threaded element 64 a first magnet 63 is arranged which is magnetically associated with a second magnet 62 introduced in a housing arranged in the second scanbody or scan post 61 which comprises the scanning zone of the replica.

This scanning zone 61, which is on the scan post or scanbody used, must have a geometry and surface finish that is scannable.

The first body 65, 69 can be made of a single material or a combination of materials, which may be metal materials, such as titanium, stainless steel or cobalt-chromium, among others, or non-metal materials, such as PEEK or ceramic polymers, among others.

The present invention is not limiting with regard to the previously described embodiments, rather there are several different modifications and variations possible within the scope of the claims described.

## Claims

1. A digitizable dental implant replica (1) for dental implantology, which allows a digital record of the position of the implant to be made in an extraoral way after positioning the replica on an impression post (20) on the dental impression tray of a patient and without the need to make a physical dental model, comprising:
- A first zone (54) at one end of the replica for connecting to an impression post and adapted to the type of implant or attachment used.
- A second zone (53) with at least one cylindrical part.
- A third zone (51), at the opposite end of the first zone, which is a scanning zone (14) and which is scannable,
wherein the replica (1) is formed by two bodies that couple together by coupling means,
**characterized in that** the first body comprises the first and second zones, and the second body comprises the third zone.

2. The replica, according to claim 1, **characterized in that** the third zone or scanning zone comprises at least one cut on the plane formed between the generatrix and the radius of the cylindrical part of the second zone (53) of the replica (1), determining at least one digitalization plane or scanning surface (14).

3. The replica, according to any of the preceding claims, **characterized in that** it comprises at least a notch (44) that follows the directrix of the second zone to mark the limit of the third zone or scanning zone.

4. The replica, according to claim 1, **characterized in that** the first zone (54) is arranged on a first independent body (42) coupled by coupling means to a second body (41) which comprises the second (53) and third (51) zones.

5. The replica, according to claim 1, **characterized in that** the third zone (51) is arranged on a second independent body (52, 61)) coupled by coupling means to a first body (53, 54, 65) which comprises the first (54) and second (53) zones.

6. The replica, according to claim 5, **characterized in that** the coupling means between the first body (65) and the second body (61) comprise:
- An element (64) that is threaded on one end to screw into a housing arranged on the first body (65), and a housing on the second end,
- A first magnet (63) incorporated in the housing of the second end of the threaded element (64),
- A second magnet (62) incorporated in the housing arranged on one end of the first body (61).

7. The replica, according to claims 4 or 5, **characterized in that** arranged between the first and second body is a non-rotating connection, to prevent rotation between both bodies.

8. The replica, according to claim 5, **characterized in that** said second body is a scan post or scanbody.

9. The replica, according to any of the preceding claims, **characterized in that** the second zone is cylindrical or cylindrical-conical.

10. The replica, according to claim 2, **characterized in that** the cut is parallel or oblique to the plane.

11. The replica, according to claim 3, **characterized in that** the notch has a circular or polygonal form.

12. The replica, according to claim 1, **characterized in that** the first zone has connection means to the implant or attachment of internal geometry.

13. The replica, according to claim 1, **characterized in that** the first zone has connection means to the implant or attachment of external geometry.

14. The replica, according to claim 1, **characterized in that** the first zone has a perforation with inner thread for the insertion of a screw that allows the impression post or attachment situated between the first zone and the screw to be adjusted.

15. The replica, according to claim 2, **characterized in that** it comprises three scanning surfaces (14), such that a first surface (16) defines the height at which the replica is situated, a second surface (17) provides information on how the replica is oriented based on the orientation of the faces thereof, and a third surface (18) defines the position of the replica on the horizontal plane.

16. The replica, according to the preceding claims, **characterized in that** it is made of a material or combination of materials, such as titanium, chromium, cobalt, stainless steel or PEEK.

17. The replica, according to the preceding claims, **characterized in that** after the scanning and digitalization it allows for CAD/CAM design and manufacturing, as well as the production of the oral model by means of milling or impression.

## Patentansprüche

1. Digitalisierbares Dentalimplantatreplikat (1) für die zahnmedizinische Implantologie, das eine extraorale digitale Aufzeichnung der Position des Implantats nach Positionierung des Replikats auf einem Abformpfosten (20) auf dem zahnmedizinischen Abformlöffel eines Patienten ermöglicht, ohne dass dafür die Anfertigung eines physischen Dentalmodells erforderlich wäre, umfassend:
- Einen an die verwendete Implantat- oder Ansatzart angepassten ersten Bereich (54) an einem Ende des Replikats zur Verbindung mit einem Abformpfosten.
- Einen zweiten Bereich (53) mit mindestens einem zylindrischen Teil.
- Einen abtastbaren dritten Bereich (51) an dem ersten Bereich gegenüberliegenden Ende, der ein Abtastbereich (14) ist,
wobei das Replikat (1) von zwei Körpern gebildet wird, die durch Verbindungsmittel miteinander verbunden sind,
**dadurch gekennzeichnet, dass** der erste Körper den ersten und zweiten Bereich und der zweite Körper den dritten Bereich umfasst.

2. Replikat nach Anspruch 1, **dadurch gekennzeichnet, dass** der dritte Bereich oder Abtastbereich mindestens einen Schnitt in der zwischen der Mantellinie und dem Radius des zylindrischen Teils des zweiten Bereichs (53) des Replikats (1) gebildeten Ebene enthält, wodurch mindestens eine Digitalisierungsebene oder Abtastfläche (14) definiert wird.

3. Replikat nach einem der vorstehenden Ansprüche, **dadurch gekennzeichnet, dass** es mindestens eine Kerbe (44) aufweist, die der Leitlinie des zweiten Bereichs folgend die Grenze des dritten Bereichs oder Abtastbereichs kennzeichnet.

4. Replikat nach Anspruch 1, **dadurch gekennzeichnet, dass** der erste Bereich (54) auf einem ersten unabhängigen Körper (42) angeordnet ist, der durch Verbindungsmittel mit einem den zweiten (53) und dritten (51) Bereich umfassenden zweiten Körper (41) verbunden ist.

5. Replikat nach Anspruch 1, **dadurch gekennzeichnet, dass** der dritte Bereich (51) auf einem zweiten unabhängigen Körper (52, 61) angeordnet ist, der durch Verbindungsmittel mit einem den ersten (54) und zweiten (53) Bereich umfassenden ersten Körper (53, 54, 65) verbunden ist.

6. Replikat nach Anspruch 5, **dadurch gekennzeichnet, dass** die Verbindungsmittel zwischen dem ersten Körper (65) und dem zweiten Körper (61) Folgendes umfassen:
- Ein Element (64) mit einem Gewinde an einem Ende zur Verschraubung in ein am ersten Körper (65) angeordnetes Gehäuse und einem Gehäuse am zweiten Ende,
- Einen in das Gehäuse am zweiten Ende des Gewindeelements (64) integrierten ersten Magneten (63),
- Einen in das Gehäuse an einem Ende des ersten Körpers (61) integrierten zweiten Magneten (62).

7. Replikat nach Anspruch 4 oder 5, **dadurch gekennzeichnet, dass** zwischen dem ersten und dem zweiten Körper eine drehfeste Verbindung zur Verhinderung einer Drehung zwischen den beiden Körpern vorhanden ist.

8. Replikat nach Anspruch 5, **dadurch gekennzeichnet, dass** der genannte zweite Körper ein Abtastpfosten oder Abtastkörper ist.

9. Replikat nach einem der vorstehenden Ansprüche, **dadurch gekennzeichnet, dass** der zweite Bereich zylindrisch oder zylindrisch-konisch ist.

10. Replikat nach Anspruch 2, **dadurch gekennzeichnet, dass** der Schnitt parallel oder schräg zur Ebene verläuft.

11. Replikat nach Anspruch 3, **dadurch gekennzeichnet, dass** die Kerbe eine kreisförmige oder polygonale Form aufweist.

12. Replikat nach Anspruch 1, **dadurch gekennzeichnet, dass** der erste Bereich Verbindungsmittel zum innengeometrischen Implantat oder Ansatz aufweist.

13. Replikat nach Anspruch 1, **dadurch gekennzeichnet, dass** der erste Bereich Verbindungsmittel zum außengeometrischen Implantat oder Ansatz aufweist.

14. Replikat nach Anspruch 1, **dadurch gekennzeichnet, dass** der erste Bereich eine Lochung mit Innengewinde zum Einsetzen einer Schraube aufweist, die eine Justierung des zwischen dem ersten Bereich und der Schraube befindlichen Abformpfostens oder Ansatzes ermöglicht.

15. Replikat nach Anspruch 2, **dadurch gekennzeichnet, dass** es drei Abtastflächen (14) aufweist, wobei eine erste Fläche (16) die Höhenlage des Replikats definiert, eine zweite Fläche (17) durch die Ausrichtung der Flächen des Replikats Aufschluss über dessen Ausrichtung gibt und eine dritte Fläche (18) die Position des Replikats in der horizontalen Ebene definiert.

16. Replikat nach den vorstehenden Ansprüchen, **dadurch gekennzeichnet, dass** es aus einem Material oder einer Materialkombination wie beispielsweise Titan, Chrom, Kobalt, Edelstahl oder PEEK besteht.

17. Replikat nach den vorstehenden Ansprüchen, **dadurch gekennzeichnet, dass** es nach dem Abtasten und Digitalisieren die CAD/CAM-Konstruktion und Fertigung sowie die Herstellung des Oralmodells durch Fräsen oder Abdruck ermöglicht.

## Revendications

1. Une réplique d'implant dentaire numérisable (1) pour implantologie dentaire, qui permet d'enregistrer numériquement la position de l'implant de manière extra-orale après avoir positionné la réplique sur un porte-empreinte (20) sur le porte-empreinte dentaire d'un patient et sans qu'il soit nécessaire de réaliser un modèle dentaire physique, comprenant :
- Une première zone (54) à une extrémité de la réplique pour la connexion à un porte-empreinte et adaptée au type d'implant ou de fixation utilisé.
- Une deuxième zone (53) avec au moins une partie cylindrique.
- Une troisième zone (51), à l'extrémité opposée de la première zone, qui est une zone de balayage (14) et qui est scannable,
où la réplique (1) est formée par deux corps qui s'accouplent par des moyens de couplage,
**caractérisée en ce que** le premier corps comprend la première et la deuxième zone, et le deuxième corps comprend la troisième zone.

2. La réplique, selon la revendication 1, **caractérisée en ce que** la troisième zone ou zone de balayage comprend au moins une coupe sur le plan formé entre la génératrice et le rayon de la partie cylindrique de la deuxième zone (53) de la réplique (1), déterminant au moins un plan de numérisation ou surface de balayage (14).

3. La réplique, selon l'une des revendications précédentes, **caractérisée en ce qu'**elle comporte au moins une entaille (44) qui suit la génératrice de la deuxième zone pour marquer la limite de la troisième zone ou zone de balayage.

4. La réplique selon la revendication 1, **caractérisée en ce que** la première zone (54) est disposée sur un premier corps indépendant (42) couplé par des moyens de couplage à un deuxième corps (41) qui comprend la deuxième (53) et la troisième (51) zones.

5. La réplique, selon la revendication 1, **caractérisée en ce que** la troisième zone (51) est disposée sur un deuxième corps indépendant (52, 61) couplé par des moyens de couplage à un premier corps (53, 54, 65) qui comprend la première (54) et la deuxième (53) zones.

6. La réplique, selon la revendication 5, **caractérisée en ce que** les moyens de couplage entre le premier corps (65) et le deuxième corps (61) comprennent :
- Un élément (64) qui est fileté à une extrémité pour être vissé dans un logement disposé sur le premier corps (65), et un logement à la seconde extrémité,
- Un premier aimant (63) incorporé dans le boîtier de la deuxième extrémité de l'élément fileté (64),
- Un deuxième aimant (62) incorporé dans le boîtier disposé à une extrémité du premier corps (61).

7. La réplique, selon les revendications 4 ou 5, **caractérisée en ce qu'**entre le premier et le deuxième corps est disposée une connexion non rotative, pour empêcher la rotation entre les deux corps.

8. La réplique, selon la revendication 5, **caractérisée en ce que** ledit deuxième corps est un poteau de balayage ou un corps de balayage.

9. La réplique, selon l'une des revendications précédentes, **caractérisée en ce que** la deuxième zone est cylindrique ou cylindro-conique.

10. La réplique, selon la revendication 2, **caractérisée en ce que** la coupe est parallèle ou oblique par rapport au plan.

11. La réplique, selon la revendication 3, **caractérisée en ce que** l'entaille a une forme circulaire ou polygonale.

12. La réplique, selon la revendication 1, **caractérisée en ce que** la première zone comporte des moyens de connexion à l'implant ou à la fixation de la géométrie interne.

13. La réplique, selon la revendication 1, **caractérisée en ce que** la première zone comporte des moyens de connexion à l'implant ou à la fixation de la géométrie externe.

14. La réplique, selon la revendication 1, **caractérisée en ce que** la première zone présente une perforation avec un filet intérieur pour l'insertion d'une vis qui permet d'ajuster le moignon d'empreinte ou l'attachement situé entre la première zone et la vis.

15. La réplique, selon la revendication 2, **caractérisée en ce qu'**elle comprend trois surfaces de balayage (14), de sorte qu'une première surface (16) définit la hauteur à laquelle la réplique est située, une deuxième surface (17) fournit des informations sur la façon dont la réplique est orientée en fonction de l'orientation de ses faces, et une troisième surface (18) définit la position de la réplique sur le plan horizontal.

16. La réplique, selon les revendications précédentes, se **caractérise par le fait qu'**elle est faite d'un matériau ou d'une combinaison de matériaux, tels que le titane, le chrome, le cobalt, l'acier inoxydable ou le PEEK.

17. La réplique, selon les revendications précédentes, **caractérisée en ce qu'**après le balayage et la numérisation, elle permet la conception et la fabrication en CFAO, ainsi que la production du modèle oral par fraisage ou impression.
